# DEMANDE DE BREVET EUROPEEN

(11) **EP 1 607 363 A2**
(43) Date de publication de la demande: **21.12.2005**
(21) Numéro de dépôt: 05300480.0
(22) Date de dépôt: 15.06.2005
(51) Int. Cl.: B66C 23/68, B66C 23/70, B65F 3/02

(54) **Grue à mât télescopique**

(30) Priorité: 15.06.2004 FR 0406452
(71) Demandeur: Coeuret, Bernard, 14310 Epinay sur Odon (FR)
(72) Inventeur: Coeuret, Bernard, 14310 Epinay sur Odon (FR)
(74) Mandataire: Herrburger, Pierre

(57) **Abrégé**

Grue à mât télescopique pour véhicule, notamment engin de chantier comprenant un mât télescopique (50) porté par une embase tournante (8) montée dans un socle (1) installé sur le châssis du véhicule.

Un bras (20) de la grue a son extrémité inférieure articulée (83) à l'embase (8), l'extrémité supérieure (22) étant articulée (24) au pied (51) du mât (50).

Un vérin de relevage (30) monté entre l'embase (8) et le bras (20) fait basculer le bras (20) vers l'arrière entre une position redressée et une position abaissée et inversement.

Un vérin de déploiement (40) monté entre le bras (20) et le mât (50) bascule le mât télescopique (20) entre une position repliée contre le bras (20) et une position déployée.

Le bras (20) et le mât télescopique (50) se replient à plat l'un contre l'autre et l'abaissement par pivotement du bras permet au mât télescopique (50) de se replier à plat sur le bras (20) et d'être rappelé au-dessus de l'embase,(8) en position de rangement.

## Description

### Domaine de l'invention

La présente invention concerne une grue à mât télescopique pour un véhicule, notamment un engin de chantier comprenant un mât télescopique porté par une embase tournante, montée dans un socle installé sur le châssis du véhicule.

### Etat de la technique

Il existe différents mâts relevables ou bras de manutention équipant les véhicules, notamment des véhicules à plate-forme ou à benne. De tels équipements sont installés à l'arrière du véhicule ou dans l'intervalle entre la benne et la cabine. Mais, de façon générale, ces équipements sont encombrants ou d'une portée limitée. Comme ces équipements ne sont à priori pas destinés à travailler dans un volume très réduit, il faut pour les déployer, déborder du gabarit du véhicule.

Les équipements de levage et de manutention de type mât télescopique pour les véhicules tels que les camions sont, en général, constitués d'un montant portant un mât télescopique avec un vérin commandant le mouvement de basculement du mât télescopique. Le montant, en général en forme de colonne reliée au châssis du véhicule, peut pivoter par rapport à son socle de manière à orienter le mât en fonction des opérations à effectuer. Pour le rangement, le mât se replie par pivotement autour de l'articulation sur la colonne et vient dans l'intervalle entre la cabine et la benne du véhicule. Le mât télescopique peut comporter une flèche qui se replie d'abord contre le mât puis le mât télescopique est rentré et l'ensemble est pivoté contre la colonne de support, en restant en position verticale ou dans une position inclinée, derrière la cabine. Quelle que soit sa réalisation, cet équipement est en général très encombrant et, du fait des dimensions de ses constituants, il ne peut se déployer dans le gabarit du véhicule, c'est-à-dire dans les limites de la largeur du véhicule sans en dépasser.

Un tel équipement ne convient que pour charger et décharger par exemple des palettes placées sur la benne du véhicule et l'outillage du bras de levage se limite à un crochet recevant une élingue ou une fourche, pour soulever et transporter une charge palettisée. En général, le mât n'est pas prévu pour recevoir un godet et travailler comme une pelleteuse ou effectuer d'autres travaux que de simples opérations de chargement et de déchargement.

### But de l'invention

La présente invention a pour but de développer une grue du type défini ci-dessus, d'encombrement réduit, permettant d'effectuer des travaux dans des conditions de très grande stabilité, notamment à l'intérieur du gabarit transversal du véhicule, utilisable également pour des travaux usuellement exécutés avec une pelleteuse, pouvant s'installer et se démonter facilement du châssis du véhicule, et offrant des possibilités d'accès et de manoeuvre très importantes.

### Exposé et avantages de l'invention

A cet effet l'invention concerne un équipement du type défini ci-dessus caractérisé par
- un bras dont l'extrémité inférieure est articulée à l'embase et l'extrémité supérieure est articulée au pied du mât,
- un vérin de relevage monté entre l'embase et le bras pour basculer le bras vers l'arrière entre une position redressée et une position abaissée ou inversement,
- un vérin de déploiement monté entre le bras et le mât pour basculer le mât télescopique entre une position repliée contre le bras et une position déployée,
- le bras et le mât télescopique se repliant à plat l'un contre l'autre et l'abaissement par pivotement du bras permettant au bras télescopique de venir à plat sur le bras et au-dessus de l'embase, en position de rangement.

L'équipement selon l'invention présente un encombrement très réduit car le mât peut se replier pratiquement à l'horizontale et reculer en position de rangement au-dessus du bras et de l'embase tout en ayant une portée importante malgré ses faibles dimensions. Grâce à sa très grande mobilité liée au basculement du bras, la grue permet de réduire la zone non accessible autour de l'embase.

La grue selon l'invention peut s'installer au milieu du véhicule, derrière la cabine et devant la benne du véhicule, ce qui favorise la stabilité de l'équipement à cause de sa position centrale, équilibrée à l'intérieur du polygone de sustentation. Cette installation centrale crée également une plage d'utilisation, symétrique par rapport au centre du véhicule, offrant ainsi une plus grande disponibilité surtout si la place pour manoeuvrer le véhicule est très étroite ; la mobilité réduite du véhicule peut alors être compensée par les très grandes mobilité et souplesse de la grue.

Le bras qui porte le mât constitue à la fois un fût qui relève le point d'articulation du pied du mât lorsqu'il est en position relevée et notamment dans une position pratiquement verticale. Il permet aussi de rappeler le pied du mât vers une position latérale extrême lorsque le bras est basculé en arrière, en position abaissée, au moins proche de la direction horizontale. A ce moment, si le mât est rangé en position horizontale, il se trouvera pratiquement placé au-dessus de l'embase dans une disposition quasi symétrique.

Cet équipement convient tout particulièrement pour de petits véhicules utilisables dans des conditions d'encombrement très réduites, et cela d'autant plus que l'équipement avec son mât peut se déployer de manière très intéressante à l'intérieur des limites latérales du mât. Le faible encombrement transversal est en particulier avantageux dans le cas de petits véhicules car l'emprise sur le châssis reste très limitée, ce qui évite d'avoir à réduire de manière significative la longueur de la benne. La très grande mobilité du mât grâce à son vérin de relevage et son vérin de déploiement permet de centrer certaines charges au voisinage ou dans le polygone de sustentation du véhicule de façon que l'ensemble reste toujours équilibré, ce qui est particulièrement important pour certains travaux, puisque le véhicule est lui-même léger. Par exemple, le mât porte une nacelle et se déplace le long d'un câble ou d'une rangée d'arbres ce qui facilite la cueillette de fruits, l'élagage et la taille d'arbres ou autres travaux de ce type.

Le mât peut recevoir à son extrémité un outillage très diversifié tel qu'un crochet, une fourche ou un godet mais aussi un outillage actif tel qu'une cisaille, une tondeuse, un taille-haie, des pinces ; on multiplie ainsi les domaines d'application de l'équipement et du véhicule sur lequel il est monté, en particulier pour une utilisation dans des terrains difficiles, des espaces de travail réduits ou des conditions de travail nécessitant une grande polyvalence de l'outillage comme cela est le cas par exemple dans les municipalités, pour les travaux les plus divers allant des travaux de construction ou de manutention à des travaux de jardinage et d'entretiens d'espaces verts.

D'une façon particulièrement intéressante, le bras est en forme de T avec une traverse de tête le pied étant articulé à l'embase et les extrémités de sa traverse de tête sont reliées l'une au vérin de relevage et l'autre au vérin de déploiement, le bras occupant une position médiane en étant flanqué de ces deux vérins. Cette embase en forme de double chape facilite le repliage de l'équipement et en particulier du mât et elle permet surtout d'abaisser l'ensemble en position repliée notamment horizontale derrière la cabine du véhicule de manière à ne pas constituer d'obstacle à la visibilité arrière.

Pour favoriser le pivotement et permettre une utilisation polyvalente, l'embase est reliée au socle par un palier de pivotement en forme de couronne d'appui et d'entraînement.

Toujours dans le sens de la stabilité et de la légèreté, le bras est formé de deux parties jumelées constituées par des plaques reliées par des axes.

De façon intéressante, la base du mât est formée par deux plaques reliées à un axe porté par le bras, et pivotant entre ces deux bras.

Suivant une autre caractéristique avantageuse, le mât télescopique rétracté a sensiblement une longueur au plus égale au gabarit transversal du véhicule auquel il est destiné, ce qui permet d'escamoter le mât en position horizontale abaissée au-dessus de l'embase, c'est-à-dire près du châssis et, en général, en dessous du bord supérieur de la benne.

Suivant une autre caractéristique, le socle portant l'embase pivotante comporte deux manchons pour les bras latéraux extensibles équipés des béquilles ainsi que des pattes de montage rapide pour installer la grue sur le châssis du véhicule.

Cette grue s'installe et se détache facilement du châssis du véhicule. Si le véhicule a une benne amovible, il est facile d'installer le châssis, sur ces béquilles et d'appuyer sur le sol ou un point d'appui avec la flèche ou l'équipement porté par l'outil pour avoir un troisième point de maintien puis de détacher les attaches du socle par rapport au châssis, les béquilles étant abaissées. L'équipement repose ainsi sur le sol et permet au véhicule de s'en dégager. Sur un chantier, cela permet d'enlever et de remplacer rapidement l'équipement pour en installer un autre.

Suivant une autre caractéristique avantageuse, la grue comporte un moyen de liaison pour l'attelage en trois points à l'arrière ou à l'avant d'un tracteur agricole et notamment des chapes pour le point haut, les deux points bas étant formés par les pattes servant déjà au montage de la grue sur un châssis de véhicule.

La grue combinée au poids du tracteur permet, malgré son faible encombrement à l'état replié, une très grande diversité d'applications par le montage d'outils et d'équipements très différents pour le chargement, d'outils actifs ou de plate formes et de nacelles pour les travaux en hauteur.

La mise en place de la grue ou son démontage se font aussi simplement que tout autre équipement assemblé à l'attelage en trois points d'un tracteur.

### Dessins

La présente invention sera décrite ci-après de manière plus détaillée à l'aide de modes de réalisation représentés dans les dessins annexés dans lesquels :
- la figure 1 est une vue en perspective d'une grue selon l'invention,
- la figure 2 est une vue de face de la grue de la figure 1,
- la figure 3 montre la grue de la figure 1 en position repliée,
- la figure 4A montre la grue prête à être installée sur le châssis d'un véhicule, en se limitant à l'embase sans le mât,
- la figure 4B est une vue en coupe horizontale selon IV-IV de la grue de la figure 4A,
- les figures 5A-5F montrent des exemples de différentes positions de déploiement de la grue,
- les figures 6A-6B montrent respectivement une vue de côté avec la grue déployée et la grue repliée,
- la figure 6C est une vue de face du véhicule,
- la figure 7 est une vue en perspective de l'arrière du châssis du véhicule portant la grue,
- les figures 8A-8C montrent trois exemples de positions d'utilisation :

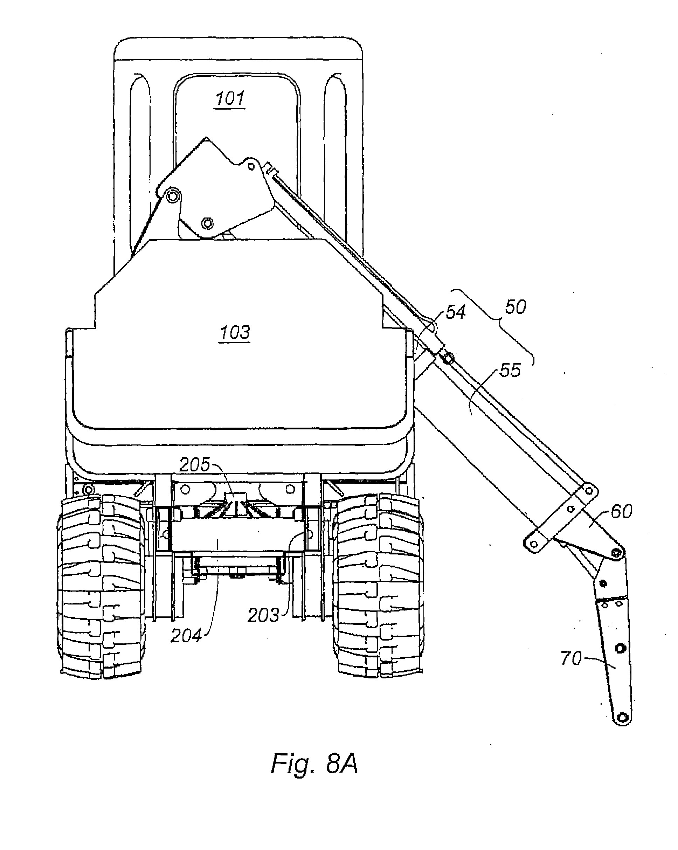

   * la figure 8A montre une vue arrière du véhicule muni de l'équipement, le bras étant en position d'utilisation comme excavatrice,

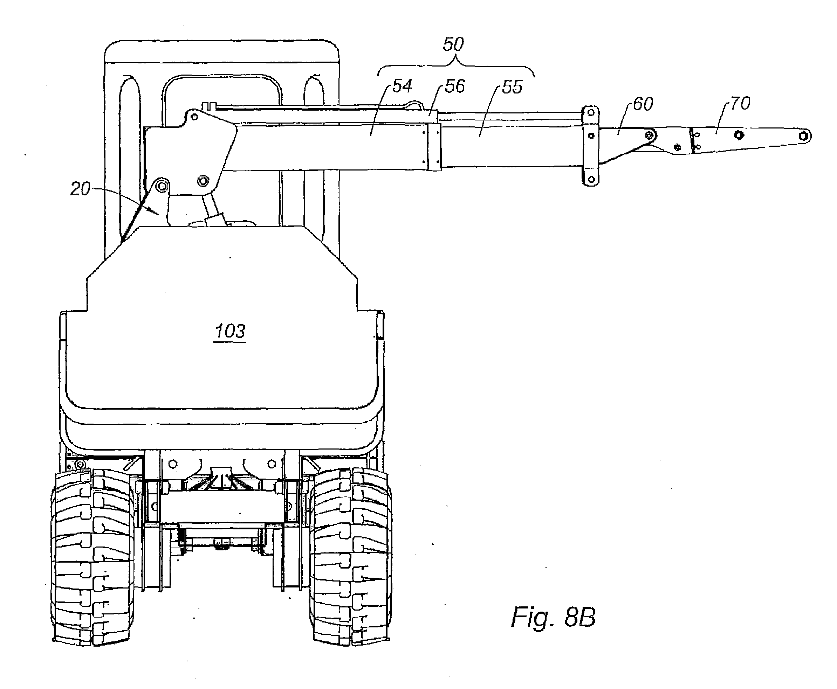

   * la figure 8B montre le débattement latéral de la grue et la portée de la flèche munie du balancier,

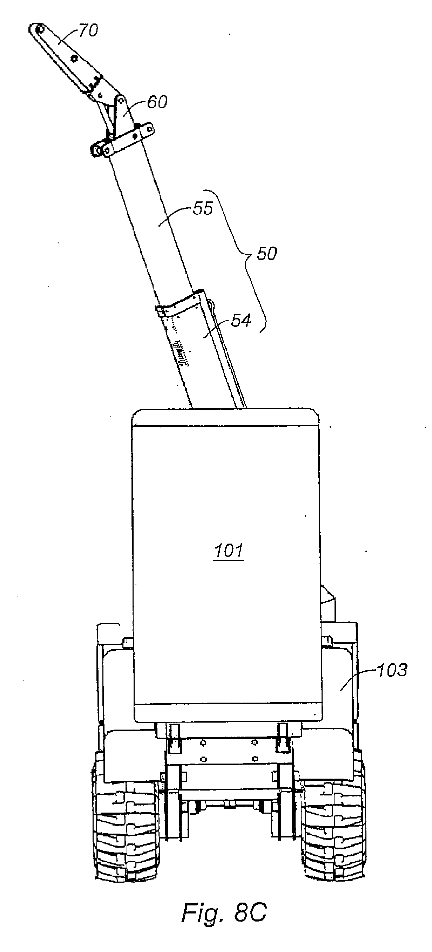

   * la figure 8C montre la grue en position relevée, par exemple en position de levage,

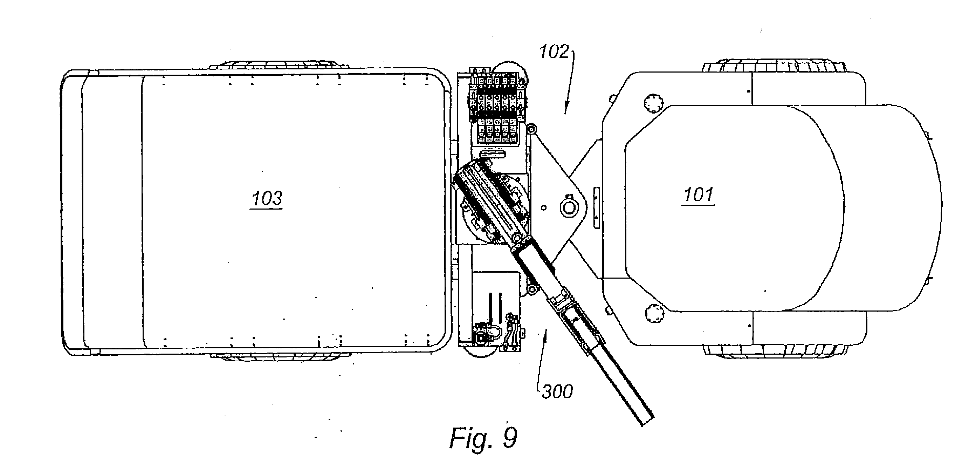

- la figure 9 est une vue de dessus du véhicule de la figure 8A,

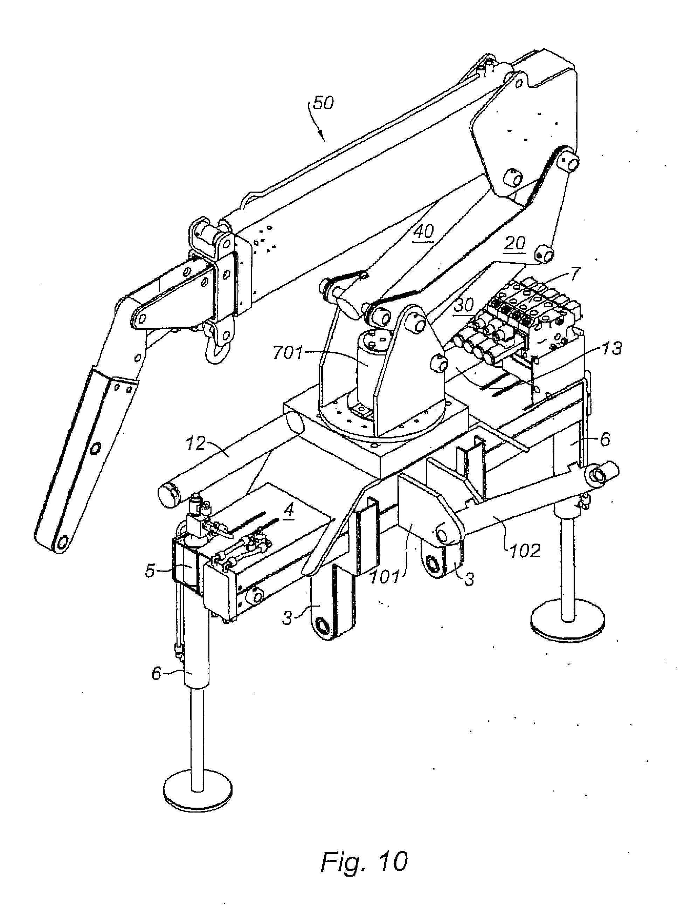

- la figure 10 est une vue de la grue équipée de moyens de fixation pour être installée sur l'attelage en trois points d'un tracteur.

### Description de modes de réalisation

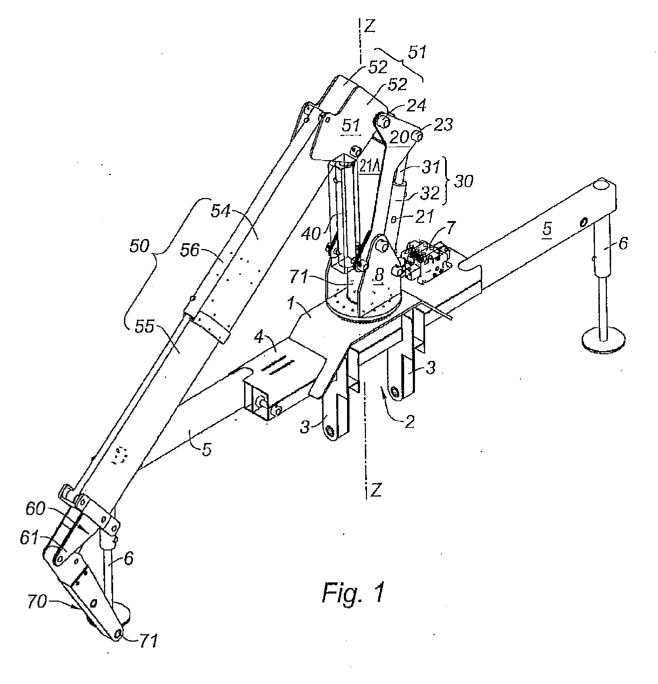

Selon les figures 1, 2 et 3, l'invention concerne une grue constituant un équipement de levage et de manutention comprenant un mât télescopique. Cette grue est destinée à être installée de préférence de manière démontable sur un véhicule notamment un camion ou un engin de chantier mais aussi à l'avant ou à l'arrière d'un tracteur agricole.

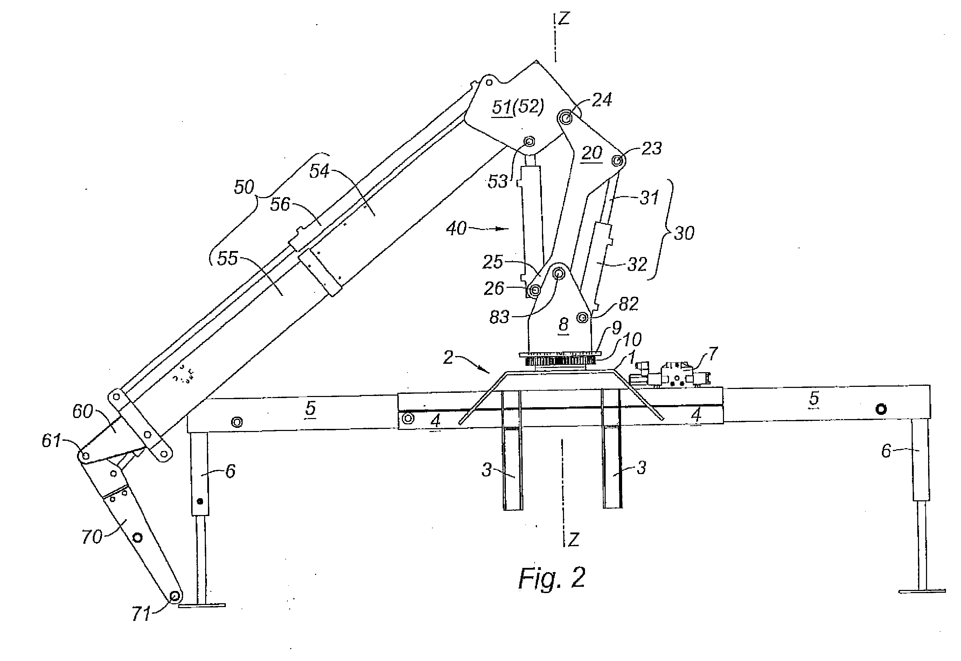

La grue se compose d'un socle 1 relié à un bâti 2 muni de pattes 3 pour être installé à cheval sur le châssis non représenté d'un véhicule et y être fixé par des moyens d'attache rapide facilitant l'installation et le démontage. Le bâti 2 porte des manchons horizontaux 4, transversaux par rapport à la direction de déplacement du véhicule (cette direction de déplacement est perpendiculaire au plan de la figure 2). Ces manchons 4 reçoivent chacun une branche extensible 5, coulissant dans le manchon et se verrouillant en position. L'extrémité extérieure, à gauche et à droite de chaque branche 5 porte une béquille 6. La béquille 6 est elle-même extensible soit mécaniquement, soit hydrauliquement pour servir d'appui latéral à la grue et stabiliser celle-ci pendant le travail.

Le bâti 2 est muni les moyens de commande hydraulique 7 tels qu'un distributeur relié par deux flexibles non représentés au circuit hydraulique du véhicule et ainsi que des moyens de commande accessibles du côté pour manoeuvrer la grue.

Le socle 1 reçoit une embase 8 pivotante par l'intermédiaire d'une couronne 9 d'appui et d'entraînement formant un palier. Cette couronne 9 est avantageusement munie d'une denture extérieure 10 engrenant avec une crémaillère, actionnée par deux vérins agissant en sens opposé et déplaçant la crémaillère pour faire tourner la couronne du palier autour de son axe vertical ZZ par rapport au socle 1. Ces moyens ne sont pas représentés de façon détaillée aux figures 1, 2, 3.

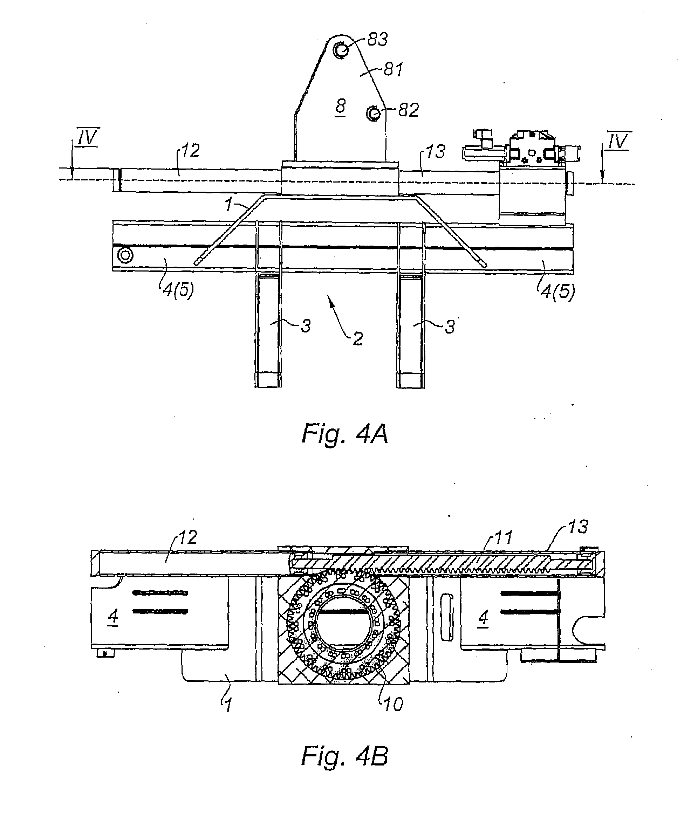

Les figures 4A, 4B montrent le socle 1 avec les branches extensibles 4, 5 et l'embase 8 ainsi que sa couronne dentée 10 engrenant avec la crémaillère 11 dont le mouvement est commandé par les deux vérins 12, 13.

La couronne 10 fait partie de l'embase pivotante 8 constituée par une plaque circulaire portant deux flasques en tôle 81, parallèles, reliés par des axes 82, 83.

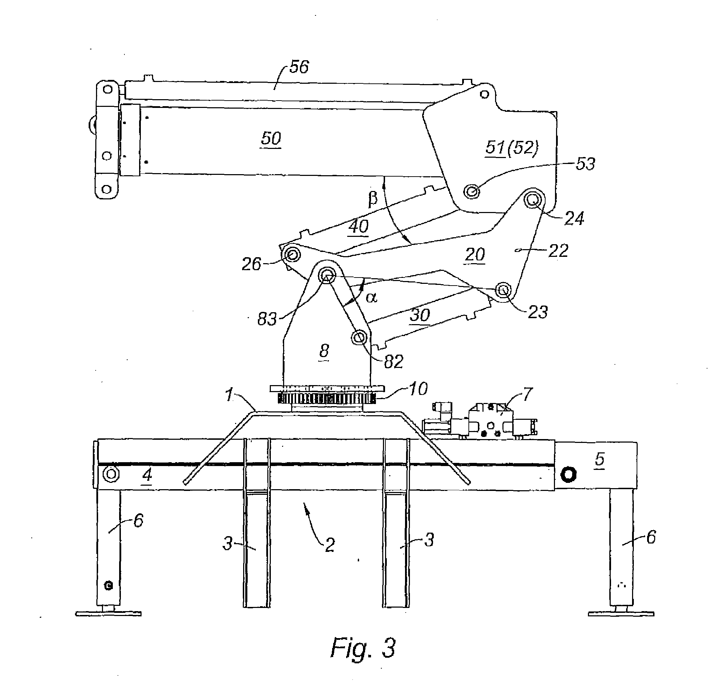

Selon les figures 2 et 3, l'embase 8 de hauteur réduite, suffisante pour l'installation des axes d'articulation 82, 83, porte un bras 20 formé par deux plaques 21 symétriques par rapport à un plan médian reliées par un voile 21A laissant libres les extrémités, celle de la traverse et celle du prolongement. On réalise ainsi un caisson à section en U. Ce bras 20 est monté articulé au niveau de sa base par l'intermédiaire de l'axe 83 de l'embase 8. La tête, à l'autre extrémité du bras 20 est en forme de traverse 22 dont les extrémités portent chacune un axe 23, 24. L'une des extrémités 23 est reliée à la tige 31 d'un vérin de relevage 30 dont l'autre extrémité ou cylindre 32 est articulée sur l'axe 82 de l'embase 8. La base du bras se prolonge par une partie en saillie 25 pour recevoir l'axe 26 relié au cylindre 42 d'un vérin de déploiement 40 relié par sa tige 41 à la base 51 du mât 50 et par son cylindre 42 à l'axe d'articulation 26 porté par le prolongement 25 du bras 20. En principe le vérin 40 pourrait être relié à un autre point du bras 20, par exemple à l'axe d'articulation 83 du bras 20 de façon que la commande du mât 50 et plus précisément son angle β (figure 3) soit indépendante du vérin de relevage 30. Mais en pratique, pour des raisons de compacité du bras 20 et de longueur disponible pour le vérin 40 en position rétractée, il est avantageux de monter l'extrémité du vérin 40 (c'est-à-dire de son cylindre 42) sur une articulation portée par le prolongement 25 du bras 20. Ainsi, comme le montre la figure 2, le bras 30 est situé entre le vérin de déploiement 40 et le vérin de relevage 30.

Le bras 20 et le vérin de déploiement 40 sont articulés au mât télescopique 50 ou plus précisément au pied 51 du mât télescopique 50. Ce pied 51 est constitué par deux plaques latérales 52 de forme globalement trapézoïdale, soudées de préférence au mât 50 et reliées à l'axe 24 de l'extrémité de la traverse 22 du bras 20 ; un autre axe 53 est relié à l'extrémité du vérin de déploiement 40.

Le mât télescopique 50 est constitué de deux parties télescopiques 54, 55 dont le déploiement ou la rétraction sont commandés par le vérin de mât 56. Le mât 50, de section de préférence rectangulaire, est muni d'une flèche 60 de section plus réduite, susceptible de rentrer et de s'escamoter dans le mât 50, même lorsque celui-ci est déjà rétracté. L'extrémité 61 de la flèche 60 porte un balancier 70 qui peut se mettre dans l'alignement de la flèche 60 et se loger avec la flèche à l'intérieur du mât 50.

L'extrémité 71 du balancier 70 est équipée d'une attache non détaillée, de préférence un dispositif de fixation rapide et/ou automatique, qui reçoit un outil. Cet outil peut lui-même être commandé par un vérin monté entre l'outil et la flèche ou le balancier.

Les outils peuvent être très divers, par exemple pour des travaux d'excavation, de chargement/déchargement et de transbordement, de manutention et autres. Il s'agit par exemple d'outils de tenue ou de préhension comme une fourche, des pinces, un godet d'excavatrice. L'outil peut également être un outil à usage agricole tel qu'un taille-haie, une cisaille, etc... pour effectuer des travaux de taille ou d'élagage en profitant de la portée relativement grande de cet équipement.

Les figures 2 et 3 présentent le bras 20 dans deux positions extrêmes ou voisines de celles-ci.

Par convention pour la description, l'avant de la grue est le côté tourné vers l'extrémité du mât et l'arrière est le côté opposé.

Ainsi, le bras 20 commandé par le vérin de relevage 30 bascule vers l'arrière à partir de sa position redressée représentée à la figure 2 vers la position abaissée représentée à la figure 3. Le mouvement de basculement fait reculer l'extrémité 22 du bras 20 (ou sa traverse) qui s'éloigne de l'axe ZZ de l'embase 8.

Inversement, lorsque le bras 20 est relevé par le vérin de relevage 30, son extrémité munie de la traverse 22 avance et se rapproche de l'axe de pivotement ZZ de l'embase 8. Ces différents mouvements correspondent schématiquement à la variation de l'angle α entre le bras et l'embase par la déformation du triangle constitué par les articulations (ou leur axe 23, 82, 83) entre le bras 20, l'embase 8 et un vérin de relevage 30, triangle ayant un côté de longueur variable représenté par le vérin 30.

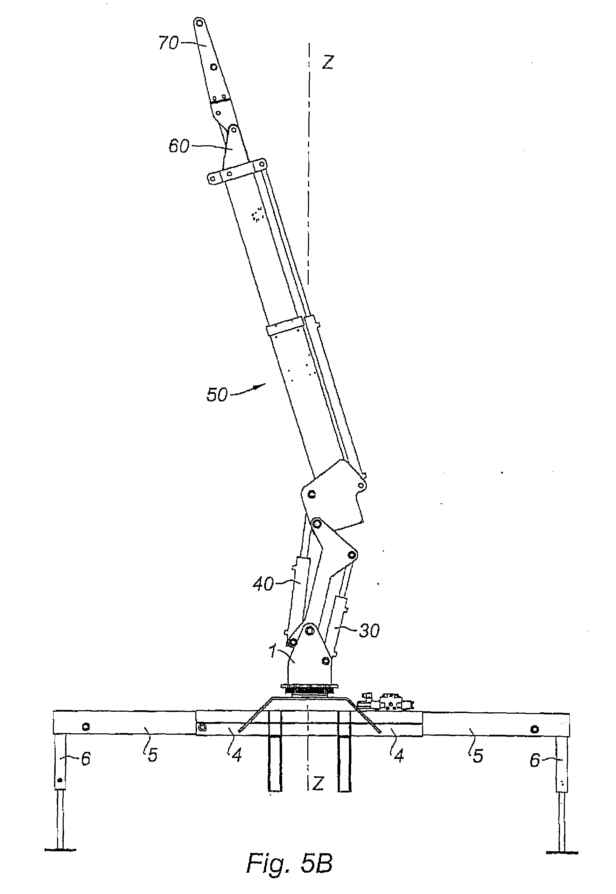

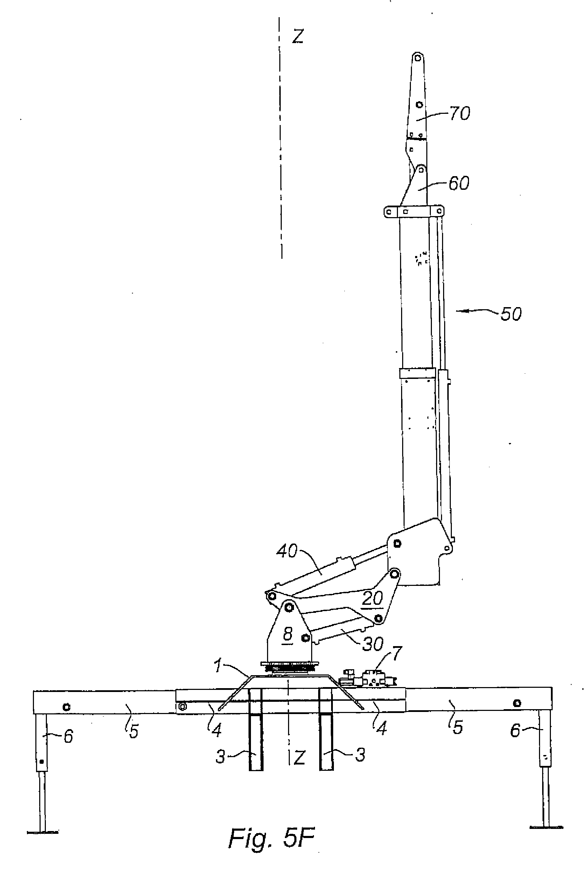

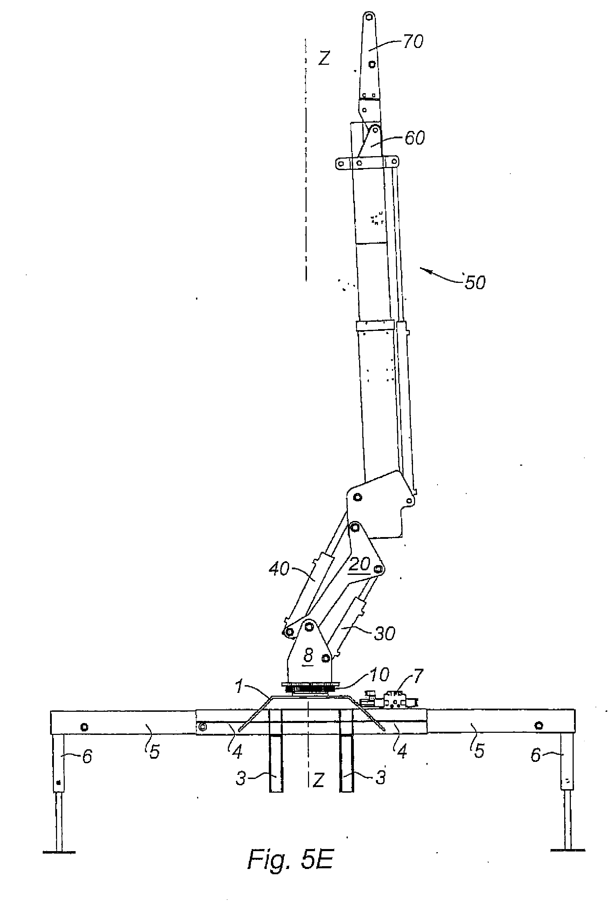

Le mouvement du mât 50 par rapport au bras 20, commandé par le vérin de déploiement 40, ouvre ou ferme l'angle β compris entre le bras 20 et le mât 50, par variation du côté de longueur variable du triangle déformable dont les sommets sont les trois articulations 24, 54, 83 entre le bras 20, le mât 50 et le vérin de déploiement 40. La position de fermeture extrême de l'angle β est représentée à la figure 3 et la position d'ouverture extrême à la figure 5B correspond à un angle d'ouverture proche de 180°.

Il est à souligner que les réglages des angles α et β sont indépendants, ce qui offre une grande possibilité de manoeuvres pour le mât et surtout cela simplifie les commandes.

La figure 3 montre l'équipement en position de rangement. Le mât 50 est complètement rétracté avec le balancier escamoté dans le mât et toutes ses parties rangées ; le mât vient en position sensiblement horizontale, au-dessus du bras 20 lui-même basculé en arrière dans une position voisine de la position horizontale. L'ordre d'exécution des opérations vers la position de rangement peut être quelconque : le mât 50 peut d'abord être rétracté puis le bras basculé en position arrière et ensuite, descendre jusque sur le bras 20. Cette position de rangement montre également que l'encombrement transversal de la grue ne dépasse pas l'encombrement transversal du socle et des manchons 4 recevant les branches extensibles 50 des béquilles. L'encombrement transversal est de préférence égal ou légèrement inférieur au gabarit du véhicule de sorte que l'ensemble est non seulement très compact mais peut être utilisé dans un espace réduit, par exemple dans un passage étroit entre deux constructions ; le mât peut néanmoins être déployé car il reste à l'intérieur du gabarit transversal de la grue.

Les différents vérins tels que les vérins de déploiement 20, de relevage 40 et de mât télescopique 56 ainsi que ceux de la flèche et du balancier sont alimentés en liquide hydraulique à partir de la centrale hydraulique par des flexibles non détaillés. La liaison entre les moyens de commande hydrauliques 7 et les vérins 30, 40, 56 ainsi que les autres vérins de l'équipement tournant de la grue, à l'exception des vérins 12, 13 commandant la crémaillère 11 de pivotement de la grue ou les vérins des béquilles, sont reliés par des joints tournants logés dans la partie cylindrique 701. Ces joints tournants sont reliés au moyen de commande 7 à travers la couronne 10. En sortie, les joints tournants de la partie cylindrique 701 sont reliés aux différents vérins par des conduites et/ou des tubes souples, non représentés. Les mouvements des vérins peuvent être commandés indépendamment mais, dans certaines circonstances, ils sont synchronisés ou commandés selon un programme. Des sécurités sont prévues pour éviter que la grue puisse faire sortir le centre de gravité de l'ensemble du véhicule et de la charge en dehors du polygone de sustentation défini par les points d'appui des béquilles et par les points d'appui du véhicule.

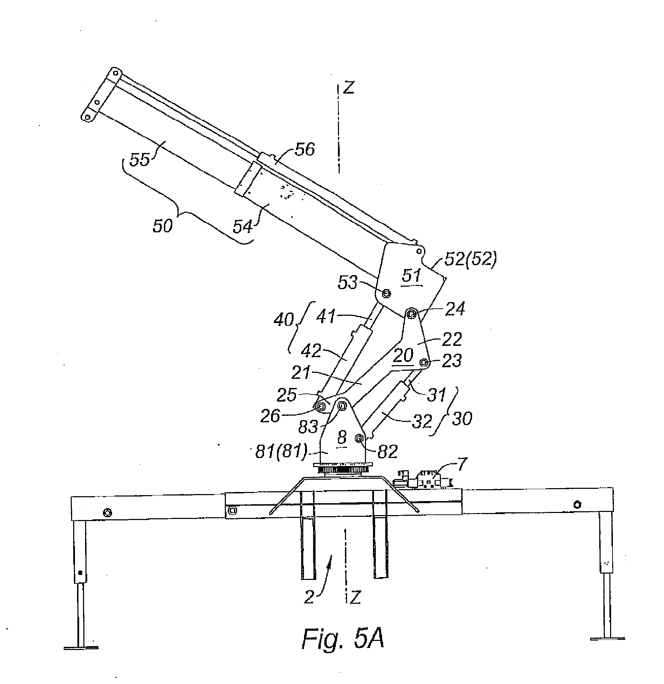

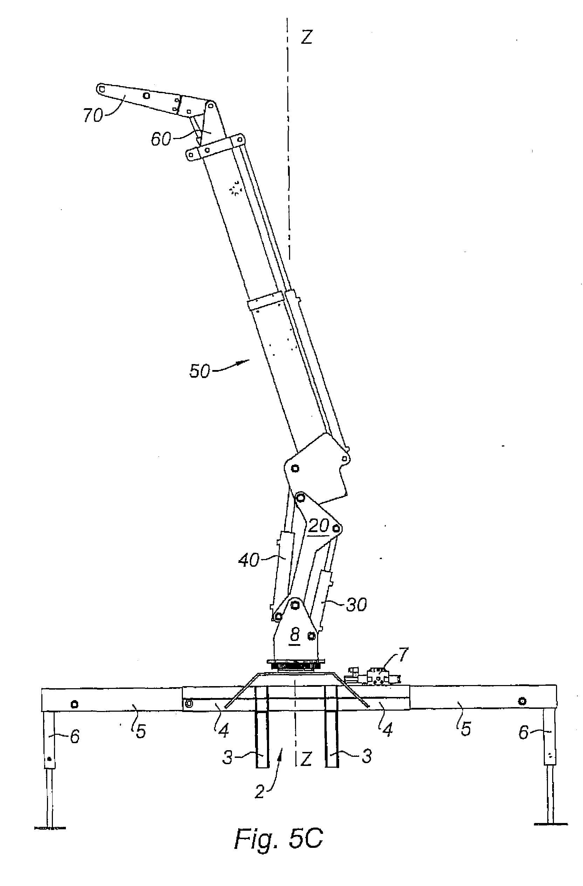

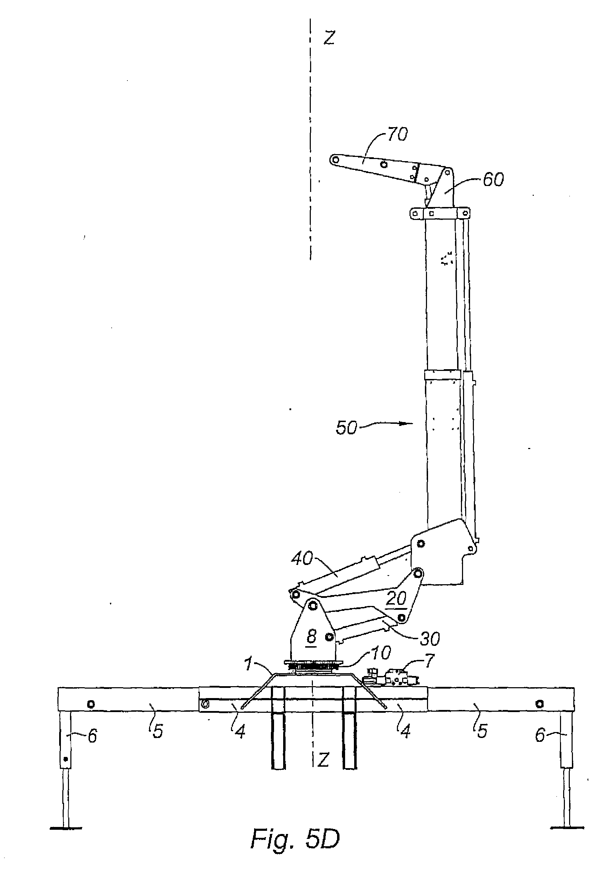

Les figures 5A-5F montrent différentes phases de déploiement du mât 50 avec sa flèche 60 et son balancier 70. Ces positions donnent à l'outil non représenté à l'extrémité du balancier, une très grande portée tant en hauteur qu'en largeur. La grue peut également s'équilibrer d'une manière commandée ou le cas échéant, automatiquement comme le montrent par exemple les figures 5C et 5D. Dans la position de la figure 5C, la grue peut recevoir une nacelle reliée à l'extrémité du balancier. Cette nacelle se trouverait alors sensiblement à la verticale de l'embase.

Grâce au jeu des vérins de relevage 20 et de déploiement 40 combinés aux vérins de mât 50 et de balancier, l'équipement peut occuper une très grande diversité de positions dans le plan et par suite dans tout le volume, par pivotement autour de l'axe vertical ZZ passant par l'embase 8.

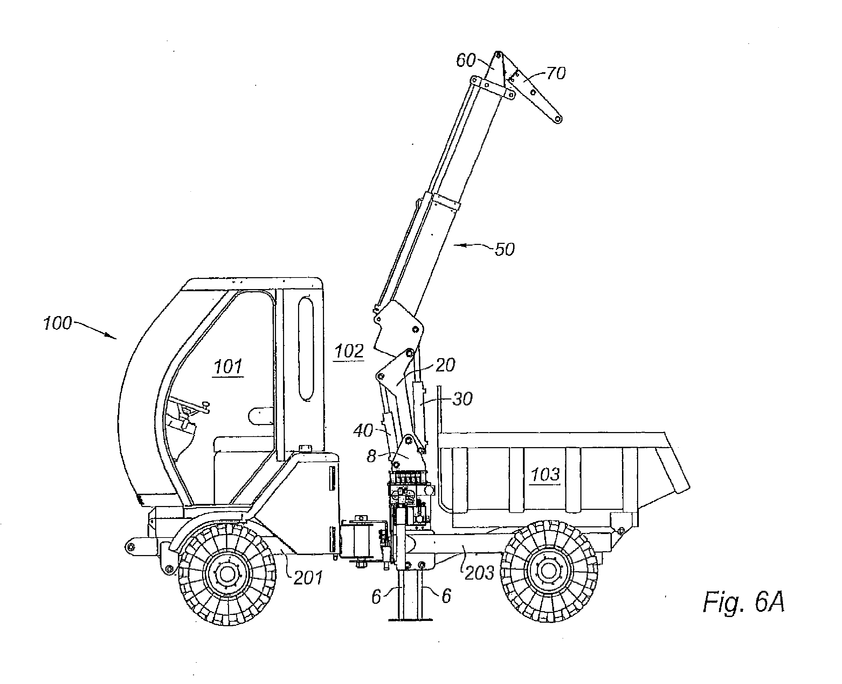

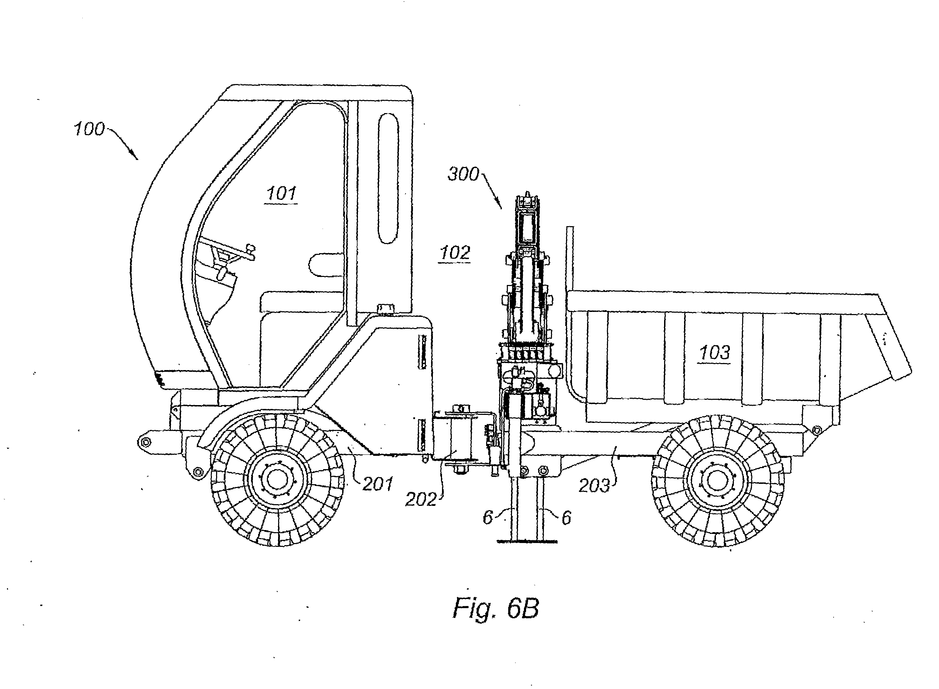

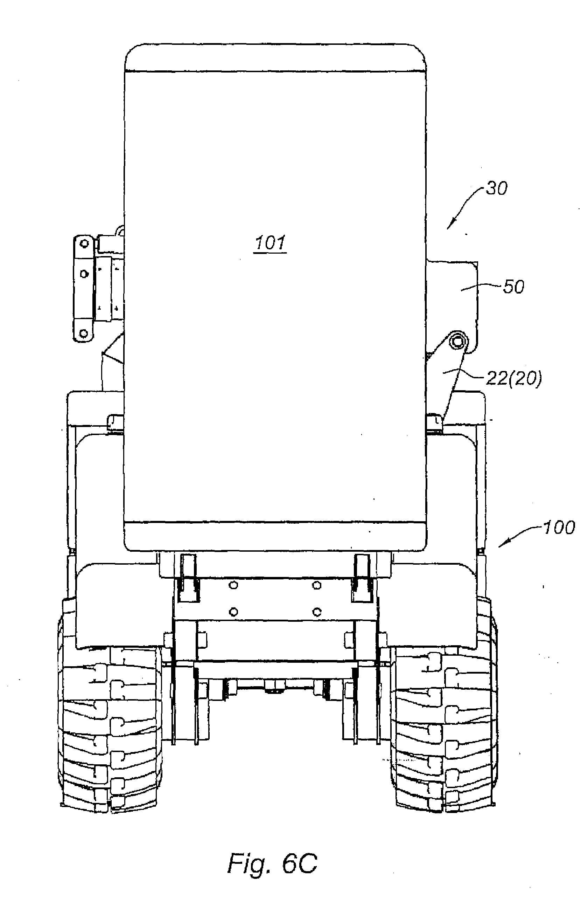

Les figures 6A, 6B, 6C montrent l'installation de la grue sur un petit véhicule 100, dans l'intervalle 102 à l'arrière de la cabine 101 et devant la benne 103. Ce véhicule est par exemple porté par un châssis en deux parties, une partie avant 201 et une partie arrière 203 reliées par une articulation 202 d'axe vertical éventuellement aussi d'axe horizontal permettant une torsion entre la partie avant et la partie arrière ; il porte la grue 300 qui s'intègre complètement dans l'espace disponible sans restreindre les mouvements de manoeuvre. Comme la grue peut se déployer dans l'intervalle 102 entre la cabine 101 et la benne 102, dans le gabarit latéral du véhicule, elle est très utile pour les travaux effectués dans les conditions d'encombrement, très réduit, par exemple dans une ruelle étroite, entre deux rangées d'arbres d'une culture ou d'une allée bordée d'arbres, tels que des travaux de manutention, d'excavation, de soulèvement ou de taille, d'élagage, de cueillette et d'entretien.

La figure 6B est une vue de côté correspondant à la figure 6A, soulignant le faible encombrement de la grue 300.

La figure 6C montre la position de rangement horizontal de la grue 300 derrière la cabine, soulignant le très faible encombrement et montrant que la grue 300 repliée ne constitue pas un obstacle de visibilité vers l'arrière.

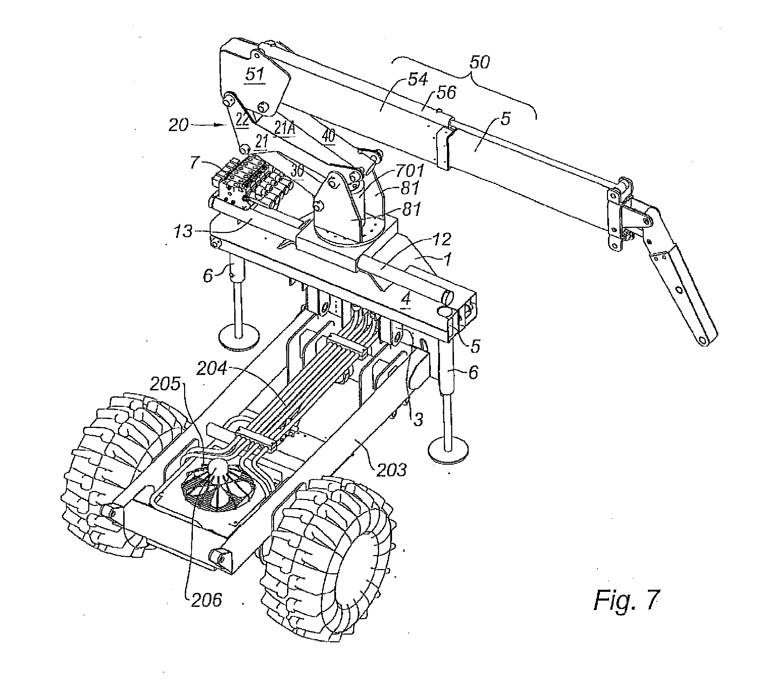

La figure 7 montre le châssis d'un véhicule, par exemple la partie arrière 203, équipé de la grue ainsi que le système de refroidissement d'huile intégré au châssis sans la benne.

Ce système de refroidissement se compose de conduites d'huile 204 passant dans la partie arrière du châssis 203 entre ses deux longerons pour rejoindre un échangeur de chaleur 205 disposé horizontalement à l'arrière, par exemple entre les deux roues ; il est et équipé d'un ventilateur électrique 205. Dans l'exemple représenté à la figure 7, on a deux ensembles de conduites 204 d'aller et de retour ; l'un des ensembles correspond au circuit hydraulique de la grue et l'autre ensemble, à celui des moteurs hydrauliques équipant les roues du véhicule. Ce système n'est pas détaillé ici.

Les figures 8A-8C montrent différents cas de déploiement de la grue.

La figure 8A montre par exemple la grue en position d'excavation ou de chargement ou déchargement latéral, au-dessous du niveau de la chaussée.

La figure 8B montre la portée en extension transversale horizontale de la grue. Cette disposition horizontale du mât 50 est particulièrement intéressante pour certains travaux. La position en hauteur du mât se règle en basculant le bras.

La figure 8C donne un exemple de travail en hauteur avec un outil à l'extrémité du balancier du mât.

La figure 9 montre le faible encombrement de l'équipement en vue de dessus.

La figure 10 montre la grue équipée pour être installée sur l'attelage en trois points d'un tracteur tel qu'un tracteur agricole.

L'avant de l'embase 1 comporte une double chape 101 munie d'un axe recevant l'extrémité du vérin 102 pour le montage au point haut de l'attelage en trois points d'un tracteur, les deux bras en partie basse de l'attelage se reliant aux pattes 3.

La grue peut s'installer à l'avant ou à l'arrière du tracteur deux points,
- à l'avant, en position repliée, la grue ne réduit pratiquement pas la visibilité,
- à l'arrière, la grue repliée ne réduit pas non plus la visibilité et, de plus, l'encombrement très réduit de la grue n'interdit pas l'installation d'autres équipements.

Ainsi, le tracteur peut être attelé à un semoir ou un épandeur d'engrais, la grue devenant alors très utile pour assurer le chargement des produits dans le réservoir du semoir ou de l'épandeur. Cette combinaison devient d'autant plus intéressante que la tendance actuelle est de conditionner les produits à épandre, en lots volumineux et lourds parfois de l'ordre de une tonne.

On évite ainsi l'utilisation d'un second tracteur et de sa fourche de levage.

La grue selon l'invention peut d'ailleurs remplacer avantageusement la fourche à deux bras équipant certains tracteurs. Cela permet un gain d'encombrement, une augmentation de l'efficacité et de la polyvalence car, contrairement à la fourche qui n'est relevable qu'autour d'un axe horizontal, dans le plan vertical longitudinal du tracteur, la grue à l'avant (comme aussi à l'arrière) du tracteur permet une intervention pratiquement sur 360° autour de son axe de pivotement. Cette liberté de mouvement facilite les opérations de chargement et/ou de déchargement. Comme dans les exemples déjà décrits, la grue permet d'équiper le tracteur de différents outils et notamment de monter une nacelle pour effectuer des travaux en hauteur dans des plantations comme par des houblonnières ou des vergers, en bénéficiant de la grande stabilité assurée par le poids du tracteur.

## Revendications

1. Grue à mât télescopique pour véhicule, notamment engin de chantier comprenant un mât télescopique porté par une embase tournante montée dans un socle installé sur le châssis du véhicule,
comprenant
- un bras (20) dont l'extrémité inférieure est articulée (83) à l'embase (8) et l'extrémité supérieure (22) est articulée (24) au pied (51) du mât (50),
- un vérin de relevage (30) monté entre l'embase (8) et le bras (20),
- un vérin de déploiement (40) monté entre le bras (20) et le mât (50),
* le bras (20) basculant vers l'arrière entre une position redressée et une position abaissée et inversement,
* le mât télescopique (50) basculant entre une position repliée contre le bras et une position déployée,
* le bras (20) et le mât télescopique (50) se replient à plat l'un contre l'autre et
* l'abaissement par pivotement du bras (20) permet au bras télescopique (50) de se replier à plat sur le bras et d'être rappelé au-dessus de l'embase (8), en position de rangement
**caractérisée en ce que**
le bras (20) est en forme de T avec une traverse de tête (22), le pied du bras étant articulé (83) à l'embase (8) et les extrémités de sa traverse de tête sont reliées l'une (23) au vérin de relevage (30) et l'autre (24) au pied (51) du mât (50),
le bras (20) se prolongeant au-delà de son articulation (83) avec l'embase (8) par un prolongement (25) portant l'articulation (26) du vérin de déploiement (40),
le bras (20) occupant une position médiane en étant flanqué de ces deux vérins (30, 40).

2. Grue selon la revendication 1,
**caractérisée en ce que**
l'embase (8) est en forme de double chape (81) logeant des joints tournants (701) pour alimenter les vérins du bras et du mât (30, 40, 56).

3. Grue selon la revendication 1,
**caractérisée en ce que**
l'embase (8) est reliée au socle (1) par un palier de pivotement en forme de couronne d'appui et d'entraînement (9).

4. Grue selon la revendication 1,
**caractérisée en ce que**
le bras (20) est formé de deux plaques jumelées.

5. Grue selon la revendication 1,
**caractérisée en ce que**
le pied (51) du mât (50) est formée de deux plaques reliées à un axe (24) porté par le bras (20) et pivotant entre les deux parties du bras (20).

6. Grue selon la revendication 1,
**caractérisée en ce que**
le mât télescopique (50) est formé d'au moins deux parties télescopiques (54, 55) commandées par un vérin (56) ainsi que d'une flèche (60) et d'un balancier (70) rétractables dans le mât (50), le balancier recevant l'outil.

7. Grue selon la revendication 1,
**caractérisée en ce que**
le mât télescopique (50) rétracté a une longueur sensiblement égale au gabarit transversal du véhicule auquel il est destiné.

8. Grue selon la revendication 1,
**caractérisée en ce qu'**
elle comprend un socle (1) ayant deux manchons (4) pour recevoir des branches extensibles (50) portant les béquilles (6) ainsi que des pattes (3) de montage rapide pour installer l'équipement sur le châssis d'un véhicule.

9. Grue selon la revendication 1,
**caractérisée en ce qu'**
elle comporte des chapes pour être installée sur l'attelage en trois points d'un tracteur de type tracteur agricole.
